# EUROPEAN PATENT APPLICATION

(11) **EP 0 826 961 A1**
(43) Date of publication of application: **04.03.1998**
(21) Application number: 97115047.9
(22) Date of filing: 29.08.1997
(51) Int. Cl.: G01N 27/12

(54) **Self-heating oxygen sensor**

(30) Priority: 30.08.1996 JP 229760/96
(71) Applicant: TOKYO GAS CO., LTD., Minato-ku Tokyo 105 (JP)
(72) Inventor: Takata, Masasuke, Nagaoka-shi, Niigata-ken 940 (JP); Huybrechts, Ben, Yokohama-shi, Kanagawa-ken 231 (JP); Okamoto, Tomoichiro, Zama-shi, Kanagawa-ken 228 (JP); Kikuchi, Kei, Kawasaki-shi, Kanagawa-ken 214 (JP); Fukuoka, Atsushi, Meguro-ku, Tokyo 153 (JP)
(74) Representative: Goddar, Heinz J., Dr.

(57) **Abstract**

A self-heating oxygen sensor comprising a sensing element, composed of an oxide and formed into a wire shaped object or a thin-film-strip shaped object such that a curve expressing temperature dependability of electric resistance has a segment of positive inclination and a hot spot is caused to occur so that a change in current value or electric resistance when a predetermined voltage is applied can be detected as a change in oxygen concentration. The self-heating oxygen sensor does not require a separate heater for heating, is simple in structure, has excellent response characteristics at a stable operating temperature, and is yet inexpensive.

## Description

### BACKGROUND OF THE INVENTION

### 1. Field of the Invention

The present invention relates to a self-heating oxygen sensor comprising a sensing element composed of an oxide formed in a wire-like shape or a thin-film-strip-like shape, and particularly to a self-heating oxygen sensor operated by taking advantage of substantial changes in electric resistivity of the sensing element taking place depending on the partial pressure of oxygen.

### 2. Description of the Related Art

Solid electrolyte type sensors using ZrO₂ and semiconductor type sensors using TiO₂ have been in use as conventional oxygen sensor. Among them, the solid electrolyte type oxygen sensor has been in most widespread use, and constituted such that the partial pressure of oxygen is measured by electromotive force generated between oxygen under examination and a standard gas (generally, air) placed adjacent to each other via a solid electrolyte. This type of oxygen sensor has been in use for controlling the air fuel ratio of an automobile.

However, the oxygen sensor using a solid electrolyte as described above generally has a complex structure because it requires the standard gas held therein. Meanwhile, the semiconductor type oxygen sensor using TiO₂ takes advantage of electric resistance of TiO₂ undergoing changes depending on the partial pressure of oxygen in an atmosphere. However, in this type of oxygen sensor, electric resistance is large, and due consideration for such a problem is required of a sensor circuit thereof, resulting in a higher cost.

Besides the two types of oxygen sensors described above, another type of oxygen sensor using one of high temperature superconductive oxides, ReBa₂Cu₃Oy (Re refers to a rare earth element), as sensing element, has been proposed (G. Grader et al., Appl. Phys. A, 45 (1988) p. 179). The oxygen sensor using the oxide described above for its sensing element makes most of electric resistivity undergoing substantial changes depending on the partial pressure of oxygen. However, in the case of the oxygen sensor using a high-temperature supercondutor composed of oxides including ReBa₂Cu₃Oy described above, an operating temperature needs to be raised, and consequently, some heating means such as a separate electric heating system, and the like is essential. This causes the structure to become complex, resulting in a higher cost. The oxygen sensors using the oxides described above have been disclosed in Japanese Patent Laid-open Publication No. Hei 2 - 154139, Hei 4 - 134259, and Hei 4 - 203959, and all the oxygen sensors disclosed in the foregoing are provided with a heating means for the sensing element, respectively.

### SUMMARY OF THE INVENTION

The inventors have already discovered that when the high-temperature superconductive oxides described above are formed into a wire-like object or a thin-film-strip like object, both ends of the wire-like object or the thin-film-strip like object are connected to a power supply source, and a predetermined voltage is applied thereto, a hot spot due to self-heating appears at a localized site. As a result, "a method of improving critical current density characteristics of a wire member" has been developed by taking advantage of such a phenomenon (Japanese Patent Application No. Hei 6 - 205623)

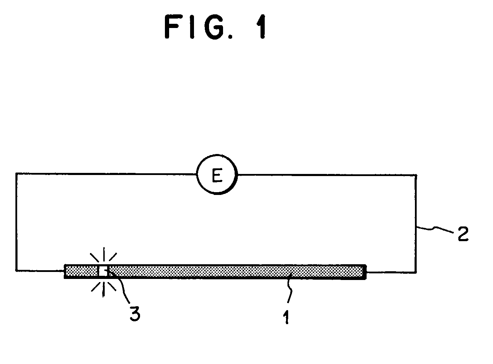

Fig. 1 is a schematic for illustrating the substance of the phenomenon described above. In Fig. 1, reference numeral 1 denotes a wire member made of a high temperature superconductive oxide, 2 lead wires, and E a power supply source. When a predetermined voltage supplied from the power source E is applied, a hot spot 3 appears at a site on the wire member 1. The hot spot 3 is caused to occur by self-healing according to Joule heating.

The inventors have continued their studies in further pursuit of the characteristics of the high temperature superconductive oxides described above, and discovered that by varying the partial pressure of oxygen in a gas atmosphere while the hot spot is occurring on the high temperature superconductive oxides formed into a wire-like object or a thin-film-strip like object, electric resistance of the wire-like object or the thin-film-strip like object is caused to change substantially, and further, the electric resistance is lower by several orders of magnitude than same for the conventional semiconductor type oxygen sensor described in the foregoing.

In the present invention, the phenomenon and fact described in the foregoing are utilized and put to a practical use in the form of an oxygen sensor. Specifically, it is an object of the invention to provide a self-heating oxygen sensor wherein response characteristics are markedly improved by enabling oxygen to be quickly diffused at a stable operating temperature without need for a separate heating means (that is, without need for a heater required by the conventional technology).

The invention provides the self-heating oxygen sensor comprising an sensing element composed of oxides, and formed into the wire-like object or the thin-film-strip-like object such that a curve indicating temperature dependency of electric resistance has a segment of positive inclination, conducing to occurrence of the hot spot so that a change in oxygen concentration is detected from a change in electric current or electric resistance when a predetermined voltage is applied

### BRIEF DESCRIPTION OF THE DRAWINGS

Fig. 1 is a schematic for illustrating the substance of a hot spot phenomenon.

Fig. 2 is a diagram for describing the hot spot and factors related thereto.

Fig. 3 is a schematic representation showing the constitution and a mode of application of a self heating oxygen sensor according to an embodiment of the invention.

Fig. 4 is a view showing a sensing element of the self heating oxygen sensor according to the embodiment of the invention.

Fig. 5 is a graph showing response speed of the self heating oxygen sensor according to the embodiment of the invention.

Fig. 6 is a graph showing measured values of electric current accompanying changes in oxygen concentration according to the embodiment of the invention.

### DESCRIPTION OF THE INVENTION

In an oxygen sensor provided with a sensing element composed of a high temperature superconductive oxide, for example, an oxide (normally in sintered form, hence it may be called ceramic) denoted by a chemical formula, ReBa₂Cu₃Oy (wherein Re refers to an element, or at least two elements selected from the group consisting of Y, La, Nd, Sm, Eu, Gd, Dy, Ho, Er, Tm, Yb, and Lu), a change in oxygen content in the oxide takes place when the partial pressure of oxygen in an atmosphere changes, resulting in an change in electric resistance of the sensing element.

In respect of the oxygen sensor according to the invention, the oxide described above is used for an element for sensing concentration of oxygen in a gas atmosphere, that is, a sensing element for oxygen concentration. The oxide is formed into a wire shaped object or a thin-film-strip shaped object, and then sintered. The wire shaped object may have a cross section in the form of a circle, ellipse, triangle, quadrilateral, other polygon, rectangle, or any other suitable form. The thin-film-strip shaped object may be formed from the aforesaid oxide, standing alone, or formed by an appropriate means so as to be coated on a supporting body in a sheet form (substrate).

By connecting both ends of the wire shaped object, or the thin-film-strip shaped object formed as above to an power source, and applying a predetermined voltage thereto, a hot spot appears at a localized site. With an oxygen sensor based on the conventional technology, using a sensing element composed of the oxide described above, use of a heater has been essential. However, the oxygen sensor according to the invention is of a self-heating type, and therefore, does not require a heater provided separately for heating.

By varying the partial pressure of oxygen in a gas atmosphere in which the wire shaped object or the thin-film-strip shaped object is placed while the hot spot described above is occurring, electric resistance of the wire shaped object or thin-film-strip shaped object is caused to change substantially. In the present invention, such phenomenon and fact are utilized and put to a practical use in the form of the oxygen sensor.

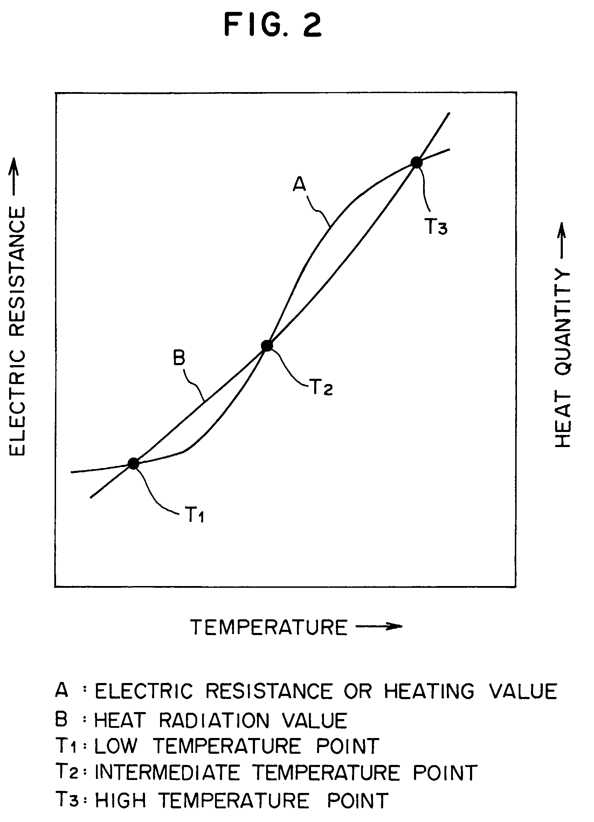

Fig. 2 is a diagram for describing the hot spot and factors related thereto. An element formed into a wire shaped object or a thin-film-strip shaped object from the oxide (oxide ceramic) such as high temperature superconductive oxide has characteristics represented by a curve A and a curve B in Fig. 2.

In Fig. 2, an abscissa denotes temperature, and an ordinate electric resistance or heat quantity, while the curve A refers to electric resistance or a heating value of the sensing element, and the curve B a heat radiation value of the sensing element.

There is a relationship between electric resistance and a heating value, as represented by a formula Q ∝ i²R (wherein Q denotes a heating value, i a current value, and R an electric resistance value), and as these values are co-related to each other, same are referred to as "heating value" hereafter where appropriate in this description. The heating value and heat radiation value of the sensing element changes, following changes in temperature. In the description, the term "temperature dependency of a heating value" refers to a phenomenon wherein a heating value changes following changes in temperature, and the term "temperature dependency of a heat radiation value" refers to a phenomenon wherein a heat radiation value changes following changes in temperature.

As shown in Fig. 2, the curve A and the curve B intersect at three points, T₁, T₂, and T₃, which are temperature points where the heating value and the heat radiation value are in equilibrium. T₁ denotes the low temperature point, T₂ the intermediate temperature point, and T₃ the high temperature point. Among the three points, the intermediate temperature point T₂ is very unstable in that when the heating value of the oxide is higher than the heat radiation value of same, a heat quantity due to self-heating of the oxide builds up, causing temperature of the oxide to rise rapidly to T₃. On the other hand, when temperature of the oxide declines below the intermediate temperature T₂, the heat radiation value exceeds the heating value, and radiation of heat proceeds, causing the temperature of the oxide to drop rapidly to T₁.

Thus, the low temperature point T₁ and the high temperature point T₃ can exist as stable equilibrium points. With respect to the oxide formed into the wire shaped object or the thin-film-strip shaped object, the phenomenon described causes a part thereof to reach the temperature at T₃ and the rest to reach the temperature at T₁, and consequently, the hot spot is caused to occur at the high temperature point T₃. In the sensing element formed into the wire shaped object or the thin-film-strip shaped object, the hot spot described come to appear due to longitudinal nonuniformity in the material quality and nonuniformity in cross sectional shape thereof at sites, for example, where a longitudinal density of material is low, or a cross sectional area is small.

In the oxygen sensor according to the invention, a stable hot spot needs to be generated so that stable signals are provided, enabling use of the sensor as stable oxygen sensor for a long period of time. The following two points are prerequisite for the physical properties of the oxide in which a stable hot spot described in the invention is caused to occur.

As a first condition, the oxide needs to have the physical property such that a curve expressing temperature dependability of the heating value thereof is similar to the curve A in the graph shown in Fig. 2. More specifically, the oxide needs to have a characteristic that in reference to the curve A expressing temperature dependability of the heating value, the curve has a segment of relatively steep positive inclination, preceded and succeeded, respectively, by a segment of less steep positive inclination or negative inclination.

Further, with reference to the curve A in Fig. 2, the curve A is in the form resembling the letter S or ∫, and has a segment of relatively steep inclination at the center thereof, preceded and succeeded, respectively, by a segment of less steep inclination. The oxide for use in the sensing element of the invention needs to have a characteristic that the temperature dependability of the heating value thereof is similar to the curve A. Herein, "positive inclination" signifies that an increase in temperature is accompanied by an increase in the heating value (electric resistance).

As a second condition, a curve expressing temperature dependability of a heat radiation value of the oxide needs to intersect the aforesaid curve A expressing temperature dependability of the heating value at three points of the low temperature point T₁, the high temperature point T₃, and the intermediate temperature point T₂ between T₁ and T₃, similarly to the curve B shown in Fig. 2, provided that the aforesaid oxide meets the first condition described above. Generally, the heat radiation value of an oxide increases straight according to a rise in temperature, and a relationship between the two parameters is approximately linear. Accordingly, an oxide having heating characteristics as expressed by the curve A in Fig. 2 may primarily be selected for the oxide used in carrying out the invention. The heat radiation value characteristic of the oxide is generally as described in the foregoing. Still, it is necessary to confirm that the oxide has the characteristic of temperature dependability of the heat radiation value, as expressed by the curve B.

Any oxide meeting the two conditions described above and capable of diffusing oxygen can be used for the oxide in carrying out the invention. For example, a class of the high temperature superconductive oxides, ReBa₂ Cu₃Oy described above (Re in the chemical formula refers to an element, or at least two elements selected from the group consisting of Y, La, Nd, Sm, Eu, Gd, Dy, Ho, Er, Tm, Yb, and Lu), Bi₂SrCa₂Cu₂Oy, Bi₂Sr₂CuOy, Bi₂Sr₂Ca₂Cu₃Oy or the like may be cited as such an oxide. In the case of using, for example, ReBa₂Cu₃Oy among the oxides described above, a temperature at the hot spot can be held in the range of about 630^{º} C to about 930^{º} C.

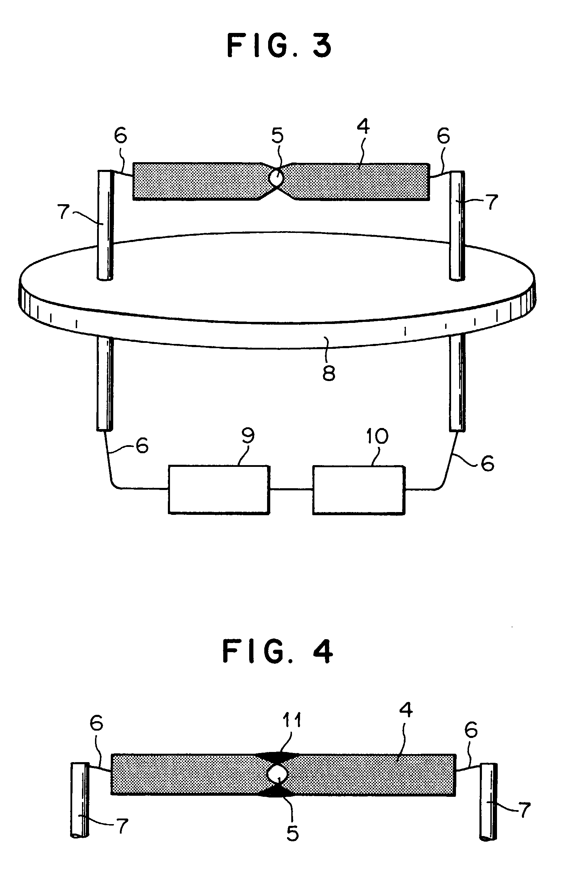

Fig. 3 is a schematic representation showing a constitution and an application mode of the self-heating oxygen sensor (hereinafter sometimes referred to merely as oxygen sensor where appropriate) according to an embodiment of the invention. In Fig. 3, reference numeral 4 refers to the sensing element formed into the wire shaped object or the thin-film-strip shaped object from the oxide, and the hot spot region 5 is provided at the center thereof. In Fig. 3, reference numeral 6 denotes the connection wire, 7 the electrodes, 8 the substrate, 9 the power supply, and 10 the processing circuit. The electrodes 7 are supported by the substrate 8, and the sensing elements 4 are connected to the power supply via the connection wires 6.

With the oxygen sensor constituted as above, the sensing elements 4 are heated up when power is supplied from the power supply 9, and the hot spot 5 reaches a high temperature (In Fig. 2, a temperature equivalent to that at the high temperature spot T₃). Hereupon, in case that the partial pressure of oxygen in a gas atmosphere wherein the sensing elements 4 are placed undergoes a change, diffusion of oxygen according to the partial pressure of oxygen occurs to the oxide composing the sensing elements 4, oxygen content in the oxide undergoes a change, and a change in electric resistivity accompanying the change described is detected as a signal through the processing circuit 10.

In case that a change occurs in the partial pressure of oxygen in a gas atmosphere wherein the oxide substantially in the form of a wire or a thin-film-strip is placed when the hot spot region 5 is at a high temperature (that is, while the hot spot is occurring) as described above, electric resistance of the oxide substantially in the form of a wire or a thin-film-strip undergoes a significant change, whereby a change in oxygen concentration is detected rapidly and sensitively by detecting the change in electric resistance. The aforesaid change in electric resistance may also be converted into a change in electric current.

In this connection, for providing the oxygen sensor with quick response characteristics, faster diffusion of oxygen into the oxide composing the wire shaped object or the thin-film-strip shaped object is required. Therefore, it is necessary firstly to keep the hot spot region of the sensing element at a high temperature (1), and secondly to make the sensing element itself more porous (2).

Firstly, for maintaining a high temperature at the hot spot region, heat sent out therefrom needs to be minimized. For example, a method of coating the hot spot region with a heat insulation material of low heat transfer coefficient is effective for such a purpose. This method not only reduces heat radiation but also has an effect of reducing power consumption.

Fig. 4 is a view showing such an embodiment of this method, and in Fig. 4, reference numeral 11 denotes the heat insulation material coated.

In adopting the method, care needs to be taken not to adversely affect the sensing performance of the hot spot region 5 due to such coating. As a preferred embodiment from such a viewpoint, use of a porous material for the heat insulation material 11 such that the partial pressure of oxygen around the heat insulation material 11 is equivalent to or substantially equivalent to that at the hot spot region 5 is cited. Since, diffusion of oxygen takes place faster in a gaseous state than in a solid, quick change in an amount of oxygen inside the sensing element according to a change in the partial pressure of oxygen in an atmosphere is achieved by using the porous sensing element and the porous heat insulation material for coating, thus providing the oxygen sensor with quick response characteristics.

A conventional method of obtaining a porous oxide ceramic is applicable to fabrication of a porous sensing element. For example, a method of pulverizing an oxide for the sensing element, molding pulverized oxide into a wire shaped object or a thin-film-strip shaped object, and then sintering same at a low temperature, or a method of mixing a material in powdery form, having a low sublimation temperature, for example, an organic chemical compound such as camphor, into the pulverized oxide for the sensing element, and then sintering mixed powders are cited.

For the heat insulation material, alumina (Al ₂O₃), magnesia (MgO), Yttria (Y₂O₃), barium titanate (BaTiO₃), and the like are cited by way of example. In case of using, for example, ReBa₂Cu₃Oy as the oxide for the sensing element, the hot spot region reaches a temperature in the range of about 630^{º} C to about 930^{º} C, and consequently, a heat resistant material capable of withstanding an operating temperature in the range of about 630^{º} C to about 930^{º} C needs to be used for the heat insulation material. The materials described above meet aforesaid condition, and may preferably be used.

With the oxygen sensor according to the invention, a change in temperature results in a change in an amount of oxygen diffused and contained in the sensing element thereof. Consequently, electric resistance of the sensing element changes as well, and a problem of measurement noises may arise. However, the effect of the change in temperature due to disturbance in a gas atmosphere can be minimized by coating the hot spot region 5 with the heat insulation material 11 as described above. Therefore, the oxygen sensor with noises at a low level is provided

While the invention is hereafter described particularly with reference to preferred embodiments, it is to be understood that the invention is not limited to the specific embodiments thereof. It will be obvious to those skilled in the art that various variations and modifications may be made without departing from the spirit of the invention.

### First Embodiment

Composite chemical compound, ReBa₂Cu₃Oy, in the form of a fine particle, (particle diameter: about 10 µm) was molded into a rectangular column with a narrow part in the middle thereof, and then heat treated in an electric furnace for sintering. The heat treatment was applied in air at 900^{º} C for a retention time of 12 hours. Thus a sensing element in a rectangular column shape (cross section: about 1 mm X 0.8 mm, length; about 15 mm) was fabricated.

### Second Embodiment

Composite chemical compound, ReBa₂Cu₃Oy, in a pellet form, was pulverized in a mortar into fine particles, each about 10 µm in diameter. Camphor was added to the composite chemical compound in powdery form in the proportion of 0.2g of the former to 1g of the latter, and mixed in the mortar. Mixed powders were again molded into a pellet with a narrow part in the middle thereof. Then, the pellet was heat treated in the electric furnace for sintering as well as causing sublimation of the camphor. The heat treatment was applied in air at 900^{º} C for a retention time of 12 hours. Thus, a sensing element in a rectangular column shape (cross section: about 1 mm X 0.8 mm, length; about 15 mm) was fabricated.

### Third Embodiment

The sensing element prepared according to the first embodiment and second embodiment, respectively, was coated at the narrow part in the middle thereof with a coating material to thickness of about 300 µm. Alumina (Al₂O₃) in paste, prepared by diffusing alumina particles, each 1 µm in diameter, into a butyl acetate solution, was used for the coating material. The paste coated on the narrow part was heat treated in the electric furnace for sintering as well as evaporating a solvent (butyl acetate). The heat treatment was applied in air at 800^{º} C for a retention time of 12 hours.

### Comparative Example

A sensing element as comparative example was prepared according the second embodiment described above except for same was not provided with a narrow part in the middle thereof.

### Performance Tests

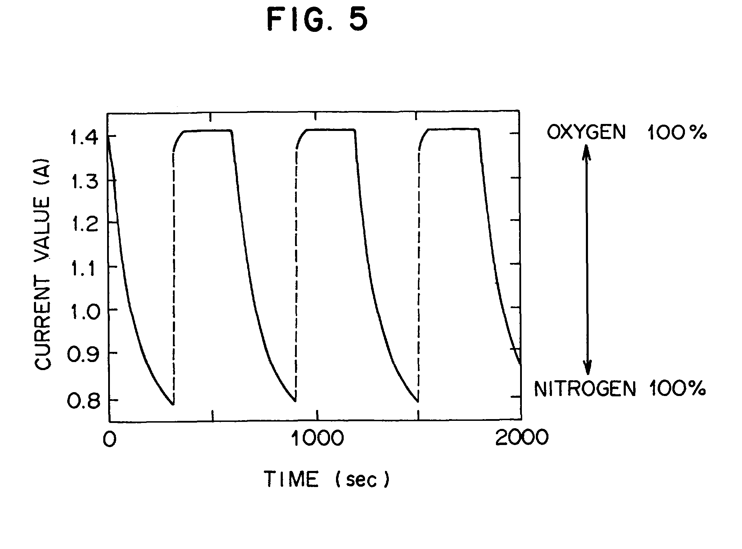

Tests on various properties required of the oxygen sensor were carried out using the sensing elements prepared as described above, and set up in a manner shown in Fig. 3. Fig. 5 shows the results of response tests in atmospheres from N₂ 100 % to O₂ 100 %, performed on an oxygen sensor fabricated by coating the hot spot region of the sensing element obtained according to the second embodiment with the coating material according to the third embodiment, that is, the results of tests on response characteristics in atmospheres from 100 % nitrogen to 100 % oxygen.

As is obvious from Fig. 5, current value indicates 0.8 A in the case of an atmosphere containing 100 % N₂, and 1.4 A in the case of an atmosphere containing 100 % O₂. Also, the results of the tests show the response characteristics of 90 % of responses being obtained in about 6 sec and quick responses following changes in an atmosphere. As opposed to the foregoing, in the case of the sensing element fabricated as comparative example without the narrow part provided and without coating by the heat insulation material, it took 30 sec to obtain 90 % of responses. Thus, the results of the tests show that with the oxygen sensor according to the invention, the response characteristics of the sensing element are considerably improved.

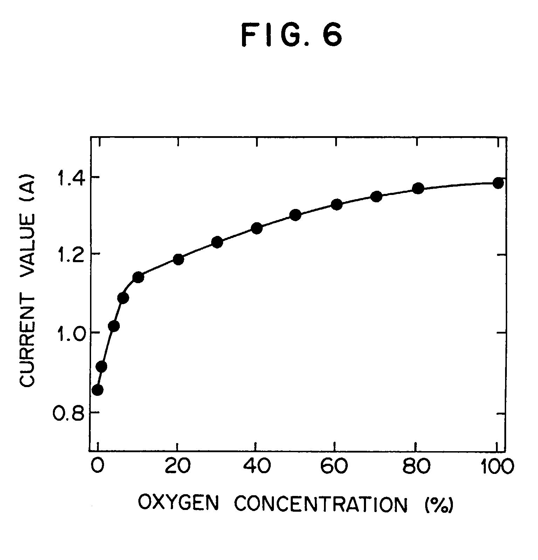

Fig. 6 is a graph showing measured current values accompanying changes in oxygen concentration at tests performed on an oxygen sensor provided with a sensing element fabricated by coating the hot spot region of the sensing element obtained according to the first embodiment with the coating material according to the third embodiment. It is obvious from Fig. 6 that with the sensing element according to the invention, current value changes distinctly according to changes in oxygen concentration in a wide range from 0 to 100 % in concentration, making the oxygen sensor very effective.

### Fourth Embodiment

With respect to an oxygen sensor provided with a sensing element using a chemical compound wherein Re is replaced by Sm, Nd, or Yb in place of the chemical compound expressed by the chemical formula, ReBa₂ Cu₃Oy, and fabricated in the same manner as described in the foregoing, similar results of tests on performance thereof were obtained. Also, with oxygen sensors provided with sensing elements using Bi₂SrCa₂Cu₂Oy, Bi₂Sr₂CuOy, and Bi₂Sr₂Ca₂Cu₃Oy, and fabricated in the same manner as described above, the similar results were obtained.

The oxygen sensor according to the invention is simple in structure without need for installing a separate heater for heating because same is of self-heating type. Further, in the oxygen sensor according to the invention, a stable operating temperature is obtained because the hot spot occurring in the sensing element corresponds to an equilibrium point for heating and heat radiation. Also, the oxygen sensor according to the invention has excellent response characteristics because of quick diffusion of oxygen in the sensing element due to the hot spot being kept at high temperatures.

In addition, electric resistance of the oxygen sensor according to the invention is lower by several orders of magnitude than that for a semiconductor type oxygen sensor, enabling use of an inexpensive circuit. Thus, according to the invention, a highly reliable and yet inexpensive oxygen sensor having an excellent sensing performance is provided.

The features disclosed in the foregoing description, in the claims and/or in the accompanying drawings may, both separately and in any combination thereof, be material for realising the invention in diverse forms thereof.

## Claims

1. A self-heating oxygen sensor comprising a sensing element, composed of an oxide and formed into a wire shaped object or a thin-film-strip shaped object such that a curve expressing temperature dependability of electric resistance thereof has a segment of positive inclination and a hot spot is caused to occur thereon so that a change in current value or electric resistance value when a predetermined voltage is applied thereto is detected as a change in oxygen concentration.

2. A self-heating oxygen sensor according to Claim 1, wherein the oxide is a material expressed by a chemical formula, ReBa₂Cu₃Oy, wherein Re refers to an element, or at least two elements selected from the group consisting of Y, La, Nd, Sm, Eu, Gd, Dy, Ho, Er, Tm, Yb, and Lu.

3. A self-heating oxygen sensor according to Claim 1, wherein the oxide is a material expressed by a chemical formula, Bi₂SrCa₂Cu₂Oy, Bi₂Sr₂CuOy, or Bi₂Sr₂Ca₂Cu₃Oy.

4. A self-heating oxygen sensor according to Claim 1, wherein the wire shaped object, or the thin-film-strip shaped object composed of the oxide is porous.

5. A self-heating oxygen sensor according to Claim 4, wherein the wire shaped object, or the thin-film-strip shaped object is formed by sintering a mixture of the oxide pulverized into fine particles and a material of a low sublimation temperature, in powdery form, molded into a wire like shape or a thin-film-strip like shape.

6. A self-heating oxygen sensor according to Claim 1, wherein a means of keeping the hot spot at high temperatures is provided.

7. A self-heating oxygen sensor according to Claim 6, wherein the means of keeping the hot spot at high temperatures is provided by coating the periphery of a predetermined site where the hot spot is formed with a porous heat insulation material.

8. A self-heating oxygen sensor according to Claim 7, wherein the porous heat insulation material is at least one of heat insulation material selected from the group consisting of alumina (Al₂O₃), magnesia (MgO), Yttria (Y₂O₃), and barium titanate (BaTiO₂).
